# EUROPEAN PATENT APPLICATION

(11) **EP 2 367 099 A2**
(43) Date of publication of application: **21.09.2011**
(21) Application number: 11002052.6
(22) Date of filing: 11.03.2011
(51) Int. Cl.: G06F 3/06

(54) **Odd raid driving method**

(30) Priority: 15.03.2010 KR 20100022831
(71) Applicant: Hitachi-LG Data Storage Korea, Inc., Geumcheon-gu Seoul 153-803 (KR)
(72) Inventor: Park, Yongkyu, Seoul, 153-803 (KR)
(74) Representative: Katérle, Axel

(57) **Abstract**

This document relates to an optical disk drive RAID driving method. In an embodiment of this document, data to be suited for a RAID level is transformed and stored in a buffer area allocated in a storage and the data stored in the buffer area is distributively recorded in a plurality of optical disks through a plurality of optical disk drives according to the RAID level.

## Description

### CROSS-REFERENCE TO RELATED APPLICATION

This application claims priority to Korean Patent Application No. 10-2010-0022831 filed on March 15, 2010, the contents of which are herein incorporated by reference in its entirety.

### BACKGROUND

### 1. Technical Field

This document relates to a method of driving a plurality of optical disk drives in a RAID manner.

### 2. Discussion of the Related Art

RAID ("Redundant Array of Independent Disks) is a technology that distributively stores data in a plurality of hard disk drives (HODs). RAID levels are divided depending on methods of distributively storing data. Reliability or overall performance of a storage device is increased according to each RAID level.

There were five RAID levels originally conceived, but many variations including several nested levels have evolved. RAID combines multiple disk drive components into a logical disk. RAID may be implemented in software or in hardware.

For example, hardware RAID allows a few disks to look like a single disk in an operating system (OS). Software RAID is mainly implemented in an operating system (OS) to let several disks look like a single disk to users.

RAID level 0 uses two stripped disks without parity for error correction. RAID level 0 has an advantage of providing additional storage with enhanced capability, but also has a disadvantage of not guaranteeing stability of materials upon failure.

RAID level 1 uses mirrored two or more disks without parity. RAID level 1 provides a failure preventing function in preparation for disk errors and disk failures and shows enhanced recording capability when an operating system supporting multithreading is used. However, RAID level 1 suffers from a shortcoming in that recording capability is slightly lowered.

RAID levels 3 and 4 use three or more stripped disks merely provided with parity. RAID level 5 uses three or more stripped disks with parity distributed. RAID level 6 uses four or more stripped disks with parity distributed. The above-described RAID levels are well known to one of ordinary skill in the art, and thus, the detailed description will not be made.

An HDD or an optical disk is used as a medium for archiving or backing up data sources. RAID technologies are necessary for stability of archived or back-up data or enhanced speed. However, the RAID technologies are applied to HDDs but not to optical disk drives (ODDs).

In a case where mass data are recorded in real time in optical disks of a device having two or more ODDs, when data is sequentially recorded in an optical disk of a first ODD and an optical disk of a second ODD, sequential data recording might not be smoothly performed due to a delay in initial operation of the second ODD. Also, when data is reproduced, sequential data reproduction might not be smoothly done due to a delay in initial operation of the second ODD.

### SUMMARY

An aspect of this document is to provide a method of managing two or more ODDs in a bundle for distributive recording/reproducing and a method of distributively recording/reproducing data in/from two or more ODDs in software to increase throughput when mass data are inputted or outputted.

According to an aspect of the present invention, there is provided an optical disk drive RAID driving method comprising transforming data to be suited for a RAID level and storing the transformed data in a buffer area allocated in a storage, and distributively recording the data stored in the buffer area in a plurality of optical disks through a plurality of optical disk drives according to the RAID level.

According to another aspect of the present invention, there is provided an optical disk drive RAID driving apparatus comprising an interface for connecting to a plurality of optical disk drives, a storage for allocating a buffer area for temporarily storing data, and a processing unit configured to process a software application for distributively recording data stored in the buffer area in a plurality of optical disks, wherein when the software application is executed, the processing unit is configured to control the interface and the storage to transform data to be suited for a RAID level, store the transformed data in the buffer area, and distributively record the data stored in the buffer area in the plurality of optical disks through the plurality of optical disk drives according to the RAID level.

According to an embodiment, the buffer area may be allocated in the storage to have a size corresponding to the RAID level and a recordable capacity of the plurality of optical disks in which the data is to be distributively recorded.

According to an embodiment, the buffer area may be allocated in the storage to have a size corresponding to the RAID level and a size of data to be distributively recorded in the plurality of optical disks.

According to an embodiment, the distributive recording may be performed when the buffer area is full of data or it is requested to eject the optical disk.

According to an embodiment, after distributively recording the data, a finalization operation may be performed on the plurality of optical disks.

According to an embodiment, the storage may be at least one of a hard disk, a solid state disk, or a flash memory.

According to an embodiment, the interface may be any one or a combination of two or more of SCSI, USB, SATA, and PATA.

The embodiments of the present invention allow RAID technologies to be applied to ODDs and may increase throughput and stability of data input/output through a plurality of ODDs.

### BRIEF DESCRIPTION OF THE DRAWINGS

The embodiments of the present invention will become readily apparent by reference to the following detailed description when considered in conjunction with the accompanying drawings wherein:
Fig. 1 is a view illustrating a configuration where an archive device having a plurality of ODDs is connected to a host according to an embodiment of the present invention;
Fig. 2 is a view illustration a configuration of a host according to an embodiment of the present invention;
Fig. 3 is a flowchart illustrating an ODD RAID driving method according to an embodiment of the present invention;
Fig. 4 is a view illustrating a menu screen of an ODD RAID setup mode according to an embodiment of the present invention;
Fig. 5 is a view illustrating an example where a buffer area is allocated in a hard disk according to an embodiment of the present invention;
Fig. 6 is a view illustrating an example where RAID level 0 is applied to four ODDs according to an embodiment of the present invention; and
Fig. 7 is a view illustrating an example where a notification message is displayed according to an embodiment of the present invention.

### DESCRIPTION OF THE EMBODIMENTS

Hereinafter, exemplary embodiments of the present invention will be described with reference to the accompanying drawings wherein the same reference numerals may be used to denote the same or substantially the same elements throughout the specification and the drawings.

According to the embodiments of the present invention, an optical disk drive (ODD) RAID driving method may be applied to various types of hosts, such as a personal computer (PC) to which two or more optical disk drives are connected.

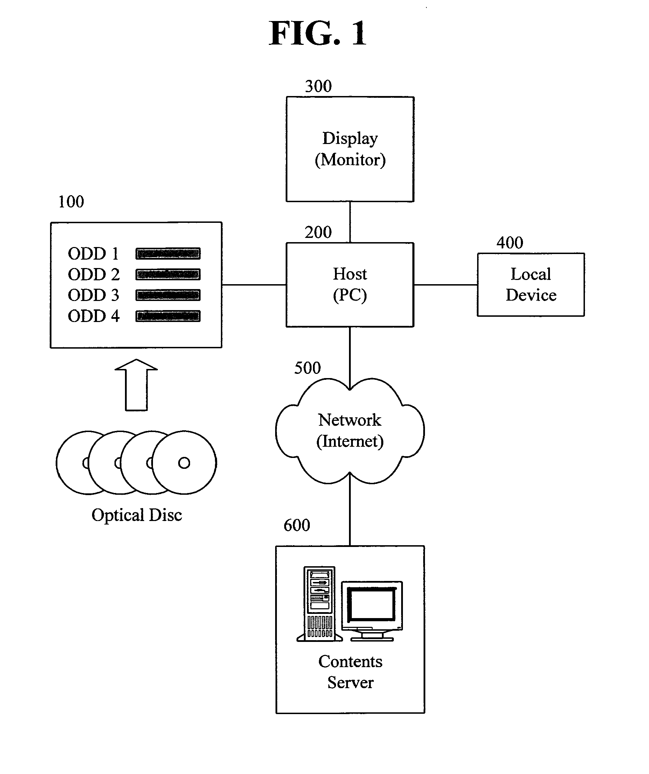

A plurality of ODDs may be separately connected to a host by the same interface or different interfaces, for example, by one or a combination of two or more of USB (Universal Serial Bus), SATA (Serial ATA), PATA (Parallel ATA), or SCSI (Small Computer System Interface). The plurality of optical disk drives may form a single archive device that may be connected to the host by the same interface scheme. As shown in Fig. 1, a plurality of ODDs (for example, ODD1 to ODD4) form a single archive device 100 that is connected to a host 200.

The archive device 100 may be integrated with the host 200 to form a single device, or may be connected to the host 200 by an interface, such as SCSI, USB, or PATA. SCSI refers to a serial type interface used to connect a peripheral device to a personal computer.

A display 300, such as a monitor, may be connected to the host 200. The host 200 may read data stored in a local device 400, for example, such as a USB memory, and may record the read data in the plurality of optical disk drives included in the archive device 100.

Further, the host 200 may be connected to a contents server 600 that provides various contents over a network 500, such as the Internet. The host 200 may download various types of contents or data, for example, such as music files, movie files, or document files from the contents server 600 and may record the contents in the plurality of optical disk drives included in the archive device 100.

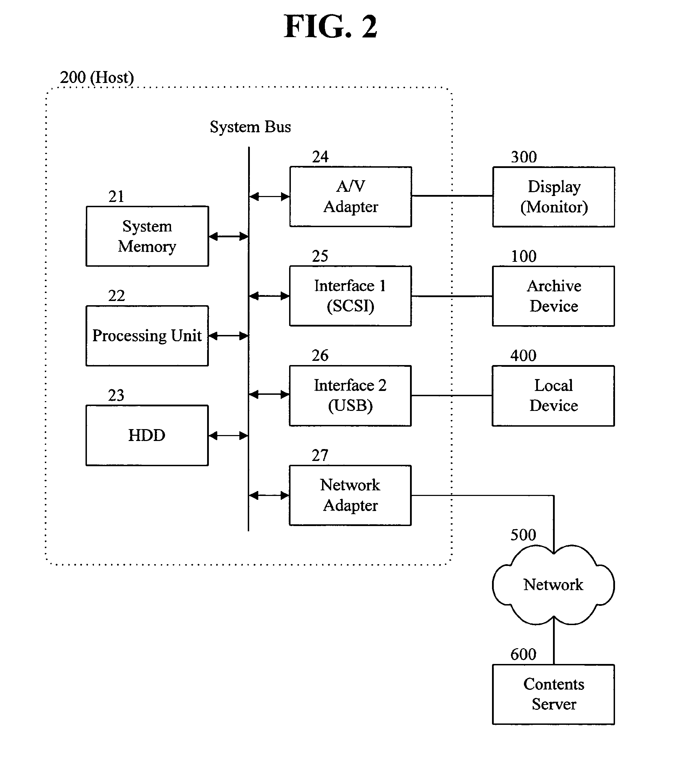

As shown in Fig. 2, the host 200 may includes some or all of a system memory 21, a processing unit 22, a hard disk drive 23, an A/V adapter 24, a first interface 25, a second interface 26, and a network adapter 27 that may be connected to each other through a system bus.

The display 300, such as a monitor, may be connected to the A/V adapter 24. A plurality of optical disk drives may be connected to the first interface 25 by the same interface or different interfaces, for example, by one or a combination of two or more of USB, SATA, PATA, or SCSI. As shown in Fig. 2, the archive device 100 including a plurality of optical disk drives may be connected to the first interface 25 through a serial interface, such as SCSI. The local device 400 may be connected to the second interface 26 through an interface, such as USB, and the contents server 600 providing various contents may be connected to the network adapter 27 through the network 500, such as the Internet.

A software application for driving the plurality of optical disk drives in a RAID manner may be executed automatically or by user' s selection in an operating system (OS), for example, such as Windows^{™} or Linux^{™}, which is running in the host 200 to enable the processing unit 22 to manage the plurality of optical disk drives in one logical volume. Input/output to/from the plurality of optical disk drives may be performed by the application through one logical volume like an HDD. Also, load/eject of each disk drive or setup of a RAID level to be applied to the plurality of optical disk drives may be carried out by the application.

Whenever data is inputted and thus data is recorded in the optical disk drives, performance may be lowered in terms of processor usage or stability of ODD. Thus, the application may make use of a temporary space of the hard disk drive 23.

For example, when performing an operation of the ODD RAID driving operation according to an application executed in the OS of the host, the processing unit 22 may identify recordable capacity of the ODDs included in the archive device 100 and a RAID level as set and may allocate a buffer area corresponding to the recordable capacity and/or the RAID level to the hard disk drive 23.

For example, in a case where RAID level 1 or another RAID level combined with RAID level 1 is set, it is not required to allocate an additional buffer area for capacity of a disk for recording data which is subjected to mirroring.

Further, the application may transform data to be suited for the set RAID level through the system memory 21 and the processing unit 22 and may temporarily store the transformed data in a buffer area of the hard disk drive 23. Then, if the buffer area is full or it is requested to eject the optical disk drive, the application may distributively record the data temporarily stored in the buffer area in the plurality of optical disks inserted in the archive device 100 according to the set RAID level. This will be described in more detail below.

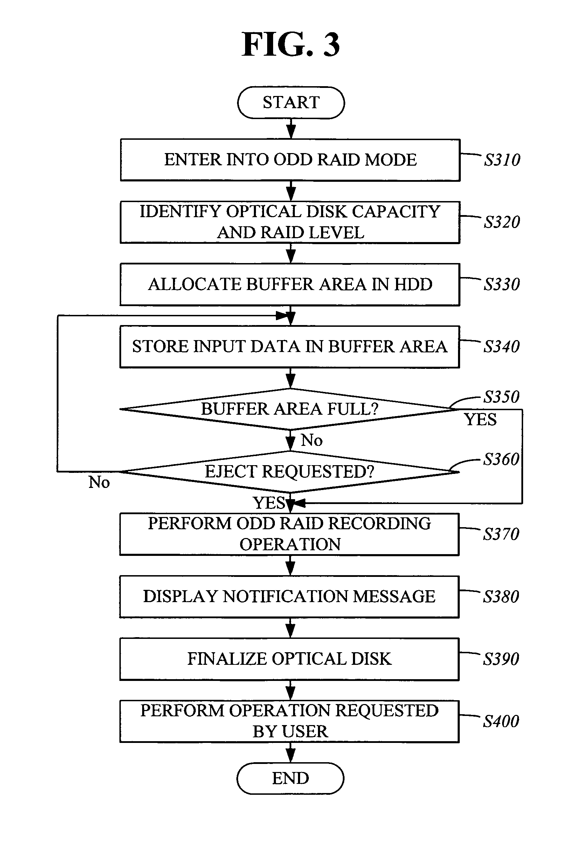

Fig. 3 is a flowchart illustrating an ODD RAID driving method according to an embodiment of the present invention.

Referring to Fig. 1, if a software application for driving a plurality of ODDs in a RAID manner is executed while the archive device 100 including the first to fourth ODDs ODD1 to ODD4 is connected to the host 200, such as a personal computer, through a predetermined interface, then the processing unit 22 enters into an ODD RAID mode (S310).

As the application is executed, the processing unit 22 performs an interfacing operation with the archive device 100 to identify recordable capacity of an optical disk inserted into each of the first to fourth ODDs ODD1 to ODD4 and a RAID level set to the application (S320). The processing unit 22 also identifies the number of ODDs to which RAID recording is applied. Non-rewritable optical disks, such as DVD-R or DVD+R, are primarily used to store a data source in the archive device 100. However, the embodiments of the present invention are not limited thereto. For example, a rewritable optical disk may also be used.

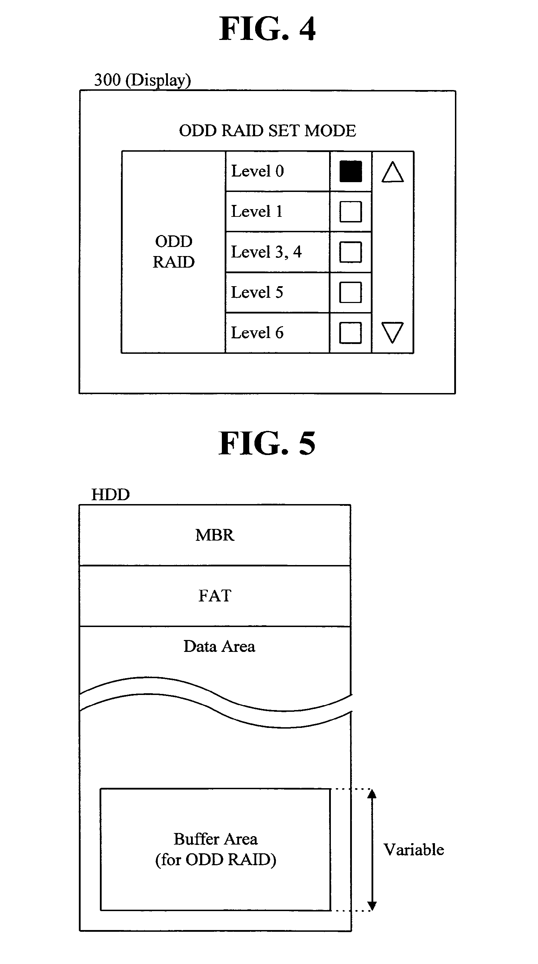

The processing unit 22 may control the A/V adapter 24 to display a user selection menu on the display 300, such as a monitor, to set up an ODD RAID level. As shown in Fig. 4, an ODD RAID SET MODE menu displayed on the display 300 may include user-selectable RAID levels, the number of ODDs to which a RAID scheme is applied, and/or items for selecting ODDs.

When a user selects a RAID level through the menu, for example when the user selects RAID level 0, the processing unit 22 sets the ODD RAID to level 0.

The processing unit 22 allocates a buffer area corresponding to the recordable capacity of each ODD and the RAID level as identified or set above to the hard disk drive 23 (S330). For example, as shown in Fig. 5, the buffer area may be allocated in part of a data area of the hard disk so that the size of the buffer area may be variably adjusted. A storage medium to which the buffer area is allocated may include not only the hard disk but also a flash memory or SSD (Solid State Disk) that may be connected through a USB or PATA interface.

For example, in a case where each optical disk inserted into each of the first to fourth ODDs ODD1 to ODD4 is a DVD-R that has a recordable capacity of 4.7GB, the processing unit 22 may allocate a buffer area of 18.8GB (=4.7GBx4) in the data area of the hard disk 23 when RAID level is not 1, may allocate a buffer area of only 4.7GB in the data area when RAID level is 1, and may allocate a buffer area of 9.4GB (=4.7GBx2) in the data area when RAID level is, for example, RAID 0+1.

When data to be written is not real-time inputted data, that is, when the size of data to be written may be known, the processing unit may allocate the buffer area to be suited for the size of the data and the RAID level.

The processing unit 22 transforms data inputted from the contents server 600 or data read from the local device 400 to be suited for the set RAID level and temporarily stores the transformed data in the buffer area of the hard disk 23 (S340).

For example, in a case where there are three ODDs and RAID level is set to be 3, the processing unit 22 divides data into a predetermined number of data blocks, each having a predetermined size, generates a parity block for each data block, and separately stores odd-numbered data blocks, even-numbered data blocks, and parity blocks in the buffer area. Or, in a case where RAID level is set to be 1, the processing unit 22 may store data to be recorded in the buffer area without data transformation.

And, in a case where data are fully stored in the buffer area (S350) or in a case where an Eject operation of an optical disk included in the archive device 100 is requested (S360), the processing unit 22 reads the data stored in the buffer area and controls the plurality of ODDs or the archive device 100 so that the read data is recorded in each of the optical disks included in the first to fourth ODDs ODD1 to ODD4-so called an "ODD RAID recording operation" is performed. In this case, the data read from the buffer area of the hard disk is distributively recorded in each of the optical disks according to a preset RAID level (S370).

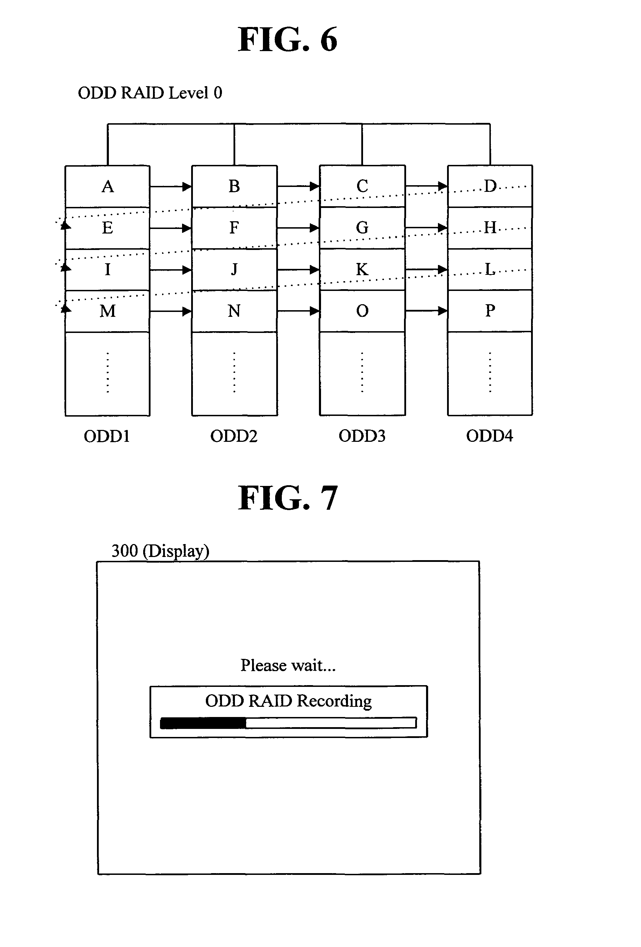

For example, as shown in Fig. 6, in a case where ODD RAID is set to be RAID level 0, the processing unit 22 distributively writes the data read from the buffer area of the hard disk into each of the optical disks included in the first to fourth ODDs ODD1 to ODD4 without parity.

In this case, the first to fourth ODDs write data in parallel, wherein the first to fourth ODDs ODD1 to ODD4 sequentially write A, E, I, and M data, B, F, J, and N data, C, G, K, and O data, and D, H, L, and P data, respectively.

In the software application, RAID level 0 is applied to the four ODDs. Thus, when transformed to be suited for RAID level 0, data are divided into a plurality of data blocks, each having a predetermined size, wherein data blocks to be written in each optical disk are together stored in the buffer area. When distributively written in each optical disk, the data together stored in the buffer area are transferred to each corresponding ODD so that the ODD may write the transferred data.

And, while the ODD RAID recording operation is performed, the processing unit 22 displays a corresponding guidance message on the display 300 (S380). For example, as shown in Fig. 7, the guidance message may include a message notifying that ODD RAID recording is in progress (for example, ODD RAID Recording), a bar-shaped graph indicating progress of recording, and a message requesting user's waiting (for example, please wait).

When the above series of ODD RAID recording operation are complete, the processing unit 22 controls the plurality of ODDs or the archive device 100 to perform a finalization operation for each of the optical disks (S390) so that the data recorded in each of the optical disks may be safely stored without being arbitrarily deleted.

Thereafter, the processing unit 22 performs an operation requested by a user (S400). For example, in a case where the user requests an Eject operation of an optical disk, the processing unit 22 normally ejects the optical disk after the RAID recording operation is complete.

As such, RAID technologies may be also applied to ODDs, and data input/output throughput or stability may be increased even through a plurality of ODDs.

The invention has been explained above with reference to exemplary embodiments. It will be evident to those skilled in the art that various modifications may be made thereto without departing from the broader spirit and scope of the invention. Further, although the invention has been described in the context its implementation in particular environments and for particular applications, those skilled in the art will recognize that the present invention's usefulness is not limited thereto and that the invention can be beneficially utilized in any number of environments and implementations. The foregoing description and drawings are, accordingly, to be regarded in an illustrative rather than a restrictive sense.

## Claims

1. An optical disk drive RAID driving method comprising:
transforming data to be suited for a RAID level and storing the transformed data in a buffer area allocated in a storage; and
distributively recording the data stored in the buffer area in a plurality of optical disks through a plurality of optical disk drives according to the RAID level.

2. The method of claim 1, wherein the buffer area is allocated in the storage to have a size corresponding to the RAID level and a recordable capacity of the plurality of optical disks in which the data is to be distributively recorded.

3. The method of claim 1, wherein the buffer area is allocated in the storage to have a size corresponding to the RAID level and a size of data to be distributively recorded in the plurality of optical disks.

4. The method of claim 1, wherein the distributive recording is performed when the buffer area is full of data or it is requested to eject the optical disk.

5. The method of claim 1, further comprising:
after distributively recording the data, performing a finalization operation on the plurality of optical disks.

6. The method of claim 1, wherein the storage is at least one of a hard disk, a solid state disk, or a flash memory.

7. An optical disk drive RAID driving apparatus comprising:
an interface for connecting to a plurality of optical disk drives;
a storage for allocating a buffer area for temporarily storing data; and
a processing unit configured to process a software application for distributively recording data stored in the buffer area in a plurality of optical disks,
wherein when the software application is executed, the processing unit is configured to control the interface and the storage to transform data to be suited for a RAID level, store the transformed data in the buffer area, and distributively record the data stored in the buffer area in the plurality of optical disks through the plurality of optical disk drives according to the RAID level.

8. The apparatus of claim 7, wherein the processing unit is configured to allocate the buffer area in the storage to have a size corresponding to the RAID level and a recordable capacity of the plurality of optical disks in which the data is to be distributively recorded, or allocate the buffer area in the storage to have a size corresponding to the RAID level and a size of data to be distributively recorded in the plurality of optical disks.

9. The apparatus of claim 7, wherein the processing unit is configured to distributively record the data stored in the buffer area in the plurality of optical disks when the buffer area is full of data or it is requested to eject the optical disk.

10. The apparatus of claim 7, wherein the processing unit is configured to perform a finalization operation on the plurality of optical disks after distributively recording the data.

11. The apparatus of claim 7, wherein the storage is at least one of a hard disk, a solid state disk, or a flash memory.

12. The apparatus of claim 7, wherein the interface is any one or a combination of two or more of SCSI, USB, SATA, and PATA.
